# EUROPEAN PATENT APPLICATION

(11) **EP 2 500 324 A1**
(43) Date of publication of application: **19.09.2012**
(21) Application number: 11158855.4
(22) Date of filing: 18.03.2011
(51) Int. Cl.: C02F 3/34, C02F 103/42

(54) **Apparatus for the microbiological treatment of water**

(71) Applicant: Vanhoutte, Koenraad, 9080 Lochristi (BE)
(72) Inventor: Vanhoutte, Koenraad, 9080 Lochristi (BE)
(74) Representative: BiiP cvba

(57) **Abstract**

An apparatus for the natural treating of water, comprising of at least a heterotrophic unit which decomposes organic loading and a phototrophic unit which incorporates nutrients derived from said heterotrophic unit.

## Description

### Field of invention

The present invention is directed to naturally water processing apparatus including units which are designed and configured such as to infiltrate, buffer, treat and re-use water. The apparatus in accordance with the present invention can be applied for in water related activities such therapeutic activities (dermic treatment, diabetic conditions, infectious conditions, tissue deteriorating conditions, ...) and/or health related water activities (skin rejuvenation, anti-oxidative bathing, mud packings,...) as well as leisure activities (bathing, spa,...), recreational activities (swimming).

### Background of the invention

In traditional water systems such as swimming pools and spas, water quality is achieved by a processing step whereby a chemical treatment step is incorporated to reduce biological loading (viruses, bacteria, etc.). Said chemical methods include chlorine based, ozone based, ionizing, salt electrolytic type of chemical treatment whereby the active species interacts with living organisms. Although apparently being efficient as a treatment , the reality is that said chemical treatment directly damages cell walls or membranes, interferes with metabolic processes leading to cell proliferation, and ultimately reducing or limiting the biological loading of the treated water.

In case chlorine based chemical treatment is used, reactive chloor radicals strongly interact with organic molecules which potentially may result in the production of toxic compounds, such as trihalomethanes. Said Trihalomethanes have been brought into association with various forms of cancer and respiratory conditions and, accordingly, potentially harmful to the human health condition.

Application of water systems, especially those in the field of therapeutics should consider the above especially since these applications concern humans and animals in weakened conditions and/or with challenged immune systems.

From the above it is made clear that current classic chemical cleaning or purification systems are destructive to micro-organisms and these methods potentially negatively impact the human condition, nature and health.

Fortunately, there is a trend towards using natural processes to treat water and not use aggressive chemical methods often combined with or overly expensive mechanical and irradiating methods. This trend has emerged in the industry of waste water treatment in which bacterial processes have been applied. This is typically applied to grey or black water, industrial process water and in brown field operations. Occasionally algae systems are being used as well. These systems are typically raceway systems, algal turf scrubbers of biorotor under light conditions. In addition there is the usage of reed bed filters (horizontal, vertical or transversal flow), wetland systems, marsh systems, ... These systems are typically added as a ternary or quaternary polishing treatment subsequent to conventional wastewater systems using biological sludge or otherwise.

Other natural processes using numerous micro-organisms, bacteria and plants have been considered. These systems are units in which natural processes are entrained into a system in order to 'clean' the water in a natural way and thus attain a natural degree of cleanliness without have to resort to aggressive chemical or other potentially harmful methods. Having used natural processes and upon having ensured that the end water volume (effluent) does not contain a predetermined level of bacteria, viruses etc., should automatically result in acceptable water quality. It should be noted that 'acceptable water quality' is in part subjective and should be related to an acceptable level within a desired application. By way of example the Solar Aquatic System uses a myriad of plants, algae, bacteria, fungi and animals (fish, snails) of both determined and undetermined nature. These systems treat e.g. grey water to a level of natural cleanliness that cannot be attained by conventional systems that are used commonly. Typically such species list consists of a selected set of species and a set of species naturally occurring in the local environment. Another example is the Living Machine and/or Eco Machine. These systems are emphasized to use local species diversity. Another example is the Algal Turf Scrubber developed by Dr. Adey. These systems essentially allow the local natural algal flora develop in the systems and allow the associated organisms thrive within that system.

The above described systems and other have been typically applied in situations where the water volume is loaded with a high level of organic origin, often predominated by organic material from faecal origin (households, agricultural facilities, ...). This high organic loading is often a prerequisite for the strictly bacterial systems to work optimally. This is evidenced by the problematic effect of sudden rainstorms that dilute the wastewater in wastewater treatment facilities and which deregulate the decomposition processes. Hence the current trend worldwide to provide separate water collection systems for rainwater and waste water. Similar but less sensitive are those systems that incorporate plants. Nonetheless, said systems have to date always been applied to water that is loaded to a high degree with organic compounds. Typical applications are the treatment of wastewater from household, housing projects, agriculture, dairy farms, food process factories, manure effluent, etc.

Yet another alternate technology that has emerged for the applications under consideration for this invention is the so called natural pool. This system addresses water bodies that have as purpose recreational swimming (natural pool) and esthetic enjoyment (natural ponds). These are as much part of a pleasing garden design as they are of a healthy attitude towards physical exercise. Roughly these natural pools consist of a swimming zone and a filtration zone. The swimming zone has inlet and outlets and may sport other attributes typical to conventional swimming pools (handrails, skimmers, fountains, cascades, aerator, cleaning robots, etc.). They can be constructed in many ways ranging from flexible designs using EPDM foils to concrete constructions. The second part of the system, the filtration zone, is the zone where the water is treated. Water collected from the swimming zone is pumped towards this zone and is run across the entire bed of filtration material, either in upflow mode or in downflow mode. The filtration material is typically planted with aquatic and/or marsh and/or riparian plants and may also include a shallow zone with submerged aquatic plants. This is the so called oxygenation zone. The main bio-activity is said to occur within the filter material, which most frequently consists of washed lava gravel, but can include other materials also.

The filter zone is typically created by making a hole in the soil or ground to the desired depth and size. This zone is than lined with water proof material, foil, geo-membrane, stabilized sands, concrete, polyester, etc. in order to make the zone to hold a water body and prevent pool water to infiltrate downwards and ground water to infiltrate upwards. Measures to prevent penetration by plant roots through this water proofed zone are typically taken. Some method of drainage systems is provided using for instance pumps and tubes and the whole filter zone has one or more influent points and one or more effluent points. The filter zone is then filled with filter material of diverse nature, for instance washed lava gravel, but many other materials can be envisaged. This filter material is then planted by macro-plants. These may be separately planted in sieve like baskets in a substratum different from the filter material. The filtration material can be seeded by a set of probiotics and bio-active bacteria, in powder or liquid form. These are the typical bacteria used in waste water treatment, e.g. Nitrosomonas, Nitrobacter, etc. This type of seeding inoculates the system with the minimal required heterotrophic organisms in order for the filter to operate. All such matters are well known to those skilled in the art.

From the description of natural pond construction it becomes apparent that the filter zone or filtration system as such is a constructed system that has no self-supporting properties. In this respect these systems are self-supporting and self-contained devices which operate on heterotrophic bacteria processes and do not contain any phototrophic organisms or bio-activity. Heterotrophic organisms typically break down organic molecules which they consume into the metabolic building blocks they use. Heterotrophs include all organisms that are predominantly dependent on respiratory metabolic processes, such as animals, bacteria, and numerous others. For the purpose of this invention we further include all detritivorous, degradiating and dissolving organisms as well, including bacteria, slime molds, molds, yeast, etc. Phototrophic activity includes all processes that converts solar energy into biological materials, and refer to organisms such as but not limited to phototrophic bacteria, filamentous algae, micro-algae, macro-phytes, seaweeds, sea vegetables, marine plants, micro-phytes, endo-symbionts, etc. This type of filter is indeed biological but only strictly heterotrophic. Such devices are typically made of a material that explicitly prevents the penetration of light, precisely to prevent phototrophic activities.

From the above it is made clear that various independent natural systems have been developed as water systems, however none of these systems use any phototrophic processes and consequently do not employ numerous guilds with a diversity of metabolic processes and treating effects.

In addition, typical water treatment systems using multiple guilds of micro- and macro-organisms have been designed for waste water treatment with substantial waste loading. Some are self-supporting while some are constructed in design and thus not self-supporting.

The present invention addresses the above needs by a self- supporting, and self-contained system (apparatus with units) for the natural treating of water, comprising of at least a heterotrophic master processus (unit) which decomposes organic loading and a phototrophic master processus which incorporates nutrients derived from said heterotrophic processus (unit). In accordance with another embodiment of the present invention, the apparatus (units) includes a fermentation masterblock and/or a mixotrophic/phototrophic algal masterblock. In accordance of a preferred embodiment of the present invention, the system is self-containing and preferably self-supporting.

As used herein , phototrophs (photoautotrophs) are organisms that carry out photosynthesis and similar processes using essentially non-organic compounds as feedstock and relates to organisms such as, eukaryotic plants, algae, protists and prokaryotic cyanobacteria, green-sulfur bacteria, green non-sulfur bacteria, purple sulfur bacteria, and purple non-sulfur bacteria. Phototrophs also include engineered organisms to carry out photosynthesis and hyperlight capturing organisms. Heterotroph: Heterotrophs (or heterotrophic organisms) are organisms that, unlike autotrophs, cannot derive energy directly from light or from inorganic chemicals, and so must feed on organic carbon substrates. These organisms obtain chemical energy by metabolizing organic molecules of various size, fraction and types. Various types of bacteria or mammals are obvious examples.

For the purpose of the invention, it is to be understood that "self-supporting" is defined as constituting a complete and independent unit in and of itself.

It is established that conversion of an existing system is exceptionally pervasive in that the entire existing structures need be pulled down, dug up, building materials removed and dumped, and subsequently an entirely new construction must be erected around the recuperated swimming zone. Again the filtration zone is a constructed system and thus not self-supporting. Adding a water loop towards an individual self-contained and self-supporting device, such as a de-phosphate device does not transfer self-supporting properties to the larger filter system.

Typically upon construction of such filtration system or indeed upon placing of a heterotrophic filtration device, the filtration material is inoculated with probiotics or bacteria. The filtration material is up to that point not bio-active in a sense that is conducive to treating water. Any biotic life present in the filter-material is irrelevant to the function that it is to perform and is therefore to be discounted. Thus to all pretense and purpose the filter-material is inactive with regard to its intended purpose. The inoculation is intended to introduce the biota which are required for the filter material to perform its intended functions, i.e. water treating. These biota first need to take hold or else put survive the inoculation. Then the biota must start multiplying in order to achieve some level of relevant bio-activity in relation to the total water volume to be treated. Then the biota must migrate throughout the entire spatial mass of the filtration material in order to interact with all the water that passes through the filter material. Simultaneously, the phototrophic biota, for instance Iris pseudacorus, needs to start growing and develop a root mass that reaches deep into the filter material. It also needs to establish a mycorhiza symbiosis with various other biota in the filter material. Depending on the size of the filter zone, the volume of water circulated, the speed of the water flow, the size of inoculation, the age, size and vitality of macrophytes used, the influent of other sources and the total environmental envelope this may take many months before the filtration zone is fully functional. Depending on the design it is full well possible that in those months various adverse processes have been initiated within the filter material in various deeper and/or anoxic pockets. Here negative processes by anoxic bacteria may produce unpleasant, smelly and even harmful side products such as sulphur gas, methane gas, etc. These processes are typically so-called "rotting processes" and are clearly not desired in the application fields envisaged for the purpose of the present invention.

### Summary of the invention

An apparatus for the natural treating of water, comprising of at least a heterotrophic unit which decomposes organic loading and a phototrophic master processus which incorporates nutrients derived from said heterotrophic processus. In accordance with another embodiment of the present invention, the process includes a fermentation unit and/or a mixotrophic/photosynthetic algal unit.

The biota that are active in these four units are entrained from as many ecological guilds as is reasonably possible including species from the local environment. In a preferred embodiment one or more elements or devices are incorporated in the system to increase the dynamization of the total water body, including the water outside the system. It is further part of a preferred embodiment to pre-activate the filter materials used in all devices encompassing all potential units.

### Detailed description of the invention

The present invention provides for an apparatus for the natural treating of water, comprising of at least a heterotrophic master processus which decomposes organic loading and a phototrophic master processus which incorporates nutrients derived from said heterotrophic processus. In accordance with another embodiment of the present invention, the process includes a fermentation unit and/or a mixotrophic/phototrophic algal unit.

In order to treat water in the applications under consideration and in accordance with the present invention the process includes heterotrophic and phototrophic processing steps. These processing steps are to be entrained from numerous guilds and should ideally include many tens if not hundreds of different species. The guilds can consist of micro-, meso- and macro-organisms. These include anaerobic, aerobic and fermenting processes. It follows that reducing an ideally composed biotic inoculation can be reduced by removing any number of species. This does not essentially change the invention principle of using both a heterotrophic and phototrophic set of organisms.

According to the priority principles known to those skilled in the art it is conducive to inoculate the system with as much beneficial organisms as is reasonably possible. The system in accordance with the present invention will self-organize and the most adapted beneficial species will create a coherent community that will perform the desired water treatment.

The process in accordance of the present invention can be considered as "conceptual" processus blocks and will be referred to as processus blocks or processus master blocks or units being part of an apparatus.

Regardless of the number of species and the number of guilds these represent at the very minimum there must be two units respectively comprising a heterotrophic process and a phototropic process. The preferred heterotrophic process selected is a bacterial process which can be a single process or a whole set of bacterial processes in a spatial configuration. These can be in up flow or down flow modus or alternating or switching, regardless of the means that create the water flow (pumps, airlift, gravity, etc.). The functional bacteria can be entrained in solid, liquid, or artificial spatial configuration. These processes are primarily aimed at decomposition and are heterotrophic in nature. The second essential unit that must be present comprise a phototropic process selected from a vegetal process. Similar to the bacterial process the vegetal process comprise a single or multiple processes in a spatial configuration. This can again be in up flow, down flow, alternating, switching modus. The phototrophic organisms can be entrained in solid, liquid, or artificial spatial configuration. For clarification the present process block comprise phototrophic processes performed by any phototrophic organism including phototrophic bacteria, micro-algae, algae, seaweeds, filamentous algae, macrophytes, helophytes, etc. In a first preferred embodiment the system comprise phototrophic bacteria, macrophytes and/or seaweeds.

Upon expansion on this theme the system may contain several bacterial processes, units, modules or sections that are connected in series or parallel, and may alternate between between either two systems.

For the purpose of example the first unit could include mineralization, nitrification and/or denitrification processes by selected bacteria such as Nitrosomonas, Nitrobacter and/or Pseudomonas while the second unit might include photosynthetic activities performed by micro-algae such as the diatom Melosiravarians.

The second level of minimally necessary blocks adds another processus block which can be added separately or simultaneously. The first additional unit contains processes typically grouped under the name fermentation. A selected set of fermenting organisms are entrained into the system and contain species belonging to the groups of Lactic acid bacteria, Photosynthetic bacteria, Yeasts, Actinomycetes, Molds and fungi. Species can cover but not limited to Streptomyces albus, Rhodopseudomonassphaeroides, Lactobacillus plantarum, Propionibacteriumfreudenreichii, Streptococcus lactis, Streptococcus faecalis, Aspergillusoryzae, Mucorhiemalis, Saccharomyces cerivisiae and Candida utilis. The fermentation process can be a single process or a whole set of bacterial processes in a spatial configuration. These processes can be in up flow or down flow modus or alternating or switching, regardless of the means that create the water flow (pumps, airlift, gravity, etc.). The functional fermentors can be entrained in solid, liquid, or artificial spatial configuration. Examples of fermentation processes are beer brewing, bokashi preparation and sauerkraut.

The second additional block contains processes typically grouped under the name algal photosynthesis. In this invention this is treated as a separate blocks as various species belonging to 'algae' are facultative myxotrophic organisms. This means they can utilize both and/or simultaneously the processes typical to heterotrophy and phototrophy. As such they are distinctly different from strictly phototrophic organisms. A selected set of myxotrophic/photosynthetic organisms are entrained into the system and contain species belonging to any of the major groups of micro algae including but not limited to Chlorophyta, Bacillariophyta, Eustigmatophyceae, Cyanobacteria, Chrysophyta, Heterokontophyta, Dinoflagellates, Cryptophyta, Haptophyta, Euglenophyta, Choroarchniophyta and the seaweed groups Brown (Phaeophyceae), Red (Rhodophyta) and Green (Chlorophyta) seaweeds and Glaucophyta.

The algal phototrophic and/or mixotrophic process can be a single process or a whole set of bacterial processes in a spatial configuration. These processes can be in up flow or down flow modus or alternating or switching, regardless of the means that create the water flow (pumps, airlift, gravity, etc.). The functional algae can be entrained in solid, liquid, or artificial spatial configuration. An example of an algal processus is a Nakamoto system with a Melosiravarians dominance.

It should be clear from the above that it is possible to combine the four different units: bacterial, vegetal, fermentor and algal in a preferred configuration in order to treat the water flow by these four distinct processus blocks.

The flow of water across all units follows the same general pattern. Water flows through the various biotic units in which the various biological processes treat and enhance the water quality from entrance to exit in one continuous flow. It could be envisaged that the unit is stopped for a period of time and the water remains stationary in one faze. In addition to the main water flow a single or multiple internal recirculation water flow can be super imposed. This super imposed water flow may occur within a single unit or cover several units of the same or different biotic nature. One could envisage a flow back cycle between a bacterial and vegetal unit, while the main water flow continuous.

In a preferred embodiment of the system the filtration system can be pre-activated in order for the filtration to be fully operational at the time of the start of operation. Furthermore pre-activation prevents the build-up of adverse biota and the blocking of undesired processes. By applying pre-activation the desired functionality is readily available upon startup and adverse undesired effects are prevented.

An example of pre-activation consists of fermentation of lava gravel with a specific and diverse mixture of micro-organisms cultivated according to the method of preparing bokashu. Another example is the use of well-developed macrophytes with developed root structures as opposed to small plants or even diminutive plant plugs. Another example is the use of pumice gravel that has been activated under aerobic conditions in an aerated aqueous system in such a way that the pumice is colonized with numerous biota. Another example is inoculating the entire water column with a pre-cultivated biotic mixture, for instance a liquid fermentation broth with a mixture of desired biota. Another example are special clays, clay balls or ceramics derived thereof that have been fermented with specific biota. For instance, a ratio of 1/1000 is desirable for using such pre-activated material. Ideally however the entire system has been pre-activated upon putting into operation.

As is clear from the fact that the system comprises of a set of different processus blocks (units) is stands to reason that the overall processus is modular in nature. The units can be referred to as bio conversion units so-called BCUs. The modularity is a logical result of the connection of various process units belonging to the abovementioned essential masterblocks. The total process is composed according to an algorithm in which the composing blocks are selected and ordered in correct sequence in relation to the input of parametric values and desired output values. Input parameters are for instance but not limited to, water volume, intensity of use, nutrient load, climatic condition, etc. and output values are for instance Oxygen level, Nitrate level, pH, etc. Modularity of the system enables configuring any desired overall processus be entraining subsystems belonging to the respective masterblocks. The modularity of any total processus may become reflected in that each subsystem may be placed in a separate spatial configuration. These separate configurations may or may not be grouped into one device. Grouping or separating device units or segments in this invention are of an engineering nature and are clear to those skilled in the art of aquatic and ecological engineering. The modularity of the present invention lies in the modularity of the processes rendered by the various biotic organisms entrained from the guilds and classifiable in one of the four masterblocks. The modularity of the invention yields flexibility that is typically not present in existing technologies.

Multiple units and multiple ways of connection, using shunts, bypasses, etc. Following the fact that the modular nature of the present invention may be reflected into various separate or joint devices it should be noted that all devices must be interconnected in order for the main water flow to remain connected. If the main flow would be interrupted the entire water body would flow once through the system and be lost to the system. Therefore one continuous flow must be maintained according to the principles of communicating vessels. It is part of this invention that side flows can be created impingent or back looping on the main flow. That being established it is part of the present invention that the individual device enclosing one or more processes can be connected in a variety of sequences. This interconnection may become superimposed with additional shunt, bypasses or shortcuts to modify the desired treatment of the water body. To this effect the devices are to be designed in such a way that they are easily and conveniently positioned next to each other or are stackable in height in order for the connection to be maximally facilitated and a minimum of surface are to be lost. One example of neatly matching lateral positioning are devices that are hexagonic in circumference and placed in a honeycomb pattern. Likewise rectangular or square devices can be placed in a checkered pattern. The separate device are connected by any means that maintains the water flow continuous and include, but not limited to, pipings, overflows, weirs, waterfalls, grids and many others. This includes alternating cascade systems such as Japanese bamboo devices that briefly interrupt the water flow. These systems do not essentially interrupt to flow of water in a sense that the water flow would not return to the original water receptacle.

Thus the connecting of various units holding one or more diverse processes can be imagined as connecting lego-blocks. This can be done front to back, lateral, sideways, diagonal, vertical, horizontal, stepwise, cascade wise, and be done following patterns such as curls, swirls, checkers, honeycombs, Buckminster structures, geodesic domes 2D and 3D, radiating patterns, self-similar patterns or fractaloid, self-merging patterns, out flowing, transversal waving and inflowing patterns and may be in addition to existing systems, constructions, devices, machines, buildings, terrains, ponds, rivers, river bends, seas, lakes, and other water bodies, etc.

Monoblock units, that can be subdivided in section addressing different processes from different biotic guilds.

### Self-contained system

It is essential that the abiotic variables of the system as a whole and of the individual master units remain within given desired boundaries. This is essential as crossing certain thresholds above or below cardinal values may result in less optimal biological processes, hence decreasing the efficiency of the entire system. It may occur that certain values are crossed that result in full biological shutdown or even reversal of the biochemical and metabolical processes. Therefor the entire system and the individual master units have provisions that allow for the system to self-regulate. Two examples are given.

First, the substrata selected on and/or in which the biota, (plants, bacteria) reside and thrive can be selected in such a manner that the passive dissolution of minerals, organic or inorganic compounds or interactions with the water column results in stabilizing the abiotic variables within a desired range. It is important to select the appropriate substratum in order for the naturally corrected variable not to exceed the threshold at the other end of the range. For instance a substratum can be selected that dissolves at a given low pH and so increase alkalinity, i.e. higher PH. It is of course not desired that the pH exceeds the upper threshold as that would be replacing one undesired value with another undesired value at the other extreme of the range of the variable. Selection of appropriate substrata, one or many, is an essential part of self-containment of the system and individual master units.

A second example also addresses pH, water acidity/alkalinity. This example concerns an active intervention by a device or devices in response to detecting an undesired value for the variable. The result of detecting the undesired value is the activation of a certain intervention, for instances shutting or opening valves, stopping or starting pumps or aeration units. For instance, as soon as a too low value for pH is detected by a pH probe, connected to a monitoring or registration device, i.e. datalog or computer, in the phase where ammonia is converted to nitrite and then nitrate, the signal could be given to the aeration device in this unit to stop. This would automatically inhibit the conversion of the nitrogen compound ammonia into nitrate. As a result the system would gradually loose its oxygen content and thus increase in pH. However this process should not be left unchecked as the process may become anaerobic to a larger extent and then again reduce pH level. As soon as a certain level of pH is reached to aeration system should again switch on before the metabolic processes lift the whole system over the hill and the pH level crashes entirely and turns to acetic acid metabolism.

The above examples illustrate a passive an active method of self-containment or self-regulation of the system. The examples both address pH but the principle is not limited to this single variable. It is understood that the principle includes, but not limited to, the variables: pH, acidity, alkalinity, German hardness, D, K, TOC, BOD, COD, oxygen, CO2, N03, N02, P04, CHLA, E.C., salinity, free chlorine, free radicals, salt stress, temperature, insulation, ambient variables (rain, snow,...), KH, DH, redox level, oxidation level, turbidity, water color, humic acids, biotic indices, bacteria load and THM. It is understood that self-containment of the system may include human interaction. Therefore conditions detected that are adverse to the health conditions of humans using the present invention in any way, may result in intervention, active or passive, that remedy the adverse condition. Intervention includes any means of remedying the adverse conditions including full shutdown and restart under the most extreme conditions, for instance after an extreme heatwave that has unhinged the entire system to such an extent that natural recovery would be too lengthy given the desired application of the system. One may have to wait two months for the system to recover while during that span of time the season of use of a leisure device or swimming pool has passed.

This principle also includes an information signal sent to remote location by hardwire or wireless network in order for the necessary intervention to be initiated and/or completed and/or overruled if so desired. In extreme case a full shut down or tilting of the system can be detected and/or initiated. If a full shutdown requires intervention from outside the system, for instance, for loading a new set of optimal substratum into the system, not reacting to the received informational signal does not detract from the invention. Receiving informational signals with regard to maintaining the desired values of essential abiotic variables, in order to guard/watch/observe and/or monitor the biotic implications and status of the systems, whole or partially, is understood to be equally part of the invention. Gathering information from informational signals from the self-contained system for scientific, interest-based, pro-active or reactive reasons or merely leisure or hobby reasons is understood to be part of the invention as it reflects the self-contained properties of the systems. The principles apply to the abiotic variables both individual and grouped, regardless of the grouping methodology used.

### Self-supporting properties

The apparatus used in this invention comprises units in such a way that these can or could be placed upon a surface and be put in operation without having to construct any additional supporting structures. It stands to reason that constructions that are built to hide, obscure, cover, make disappear or incorporate the systems do not add any self-supporting properties and as such do not detract from the present invention should they be employed. In addition it can be envisaged that the systems are placed on a construction that raises the entire system above ground floor. Raising the system upon a higher surface does not transfer any self-supporting properties to the system and thus employing such structure do not detract from the present invention. Self-supporting properties of these systems are not trivial as a significant volume of water is to be passed through these systems. Volumes of water and flow dynamics exert physical stresses on the material which can rupture, break, tear, disconnect at seams etc. in case the structure is not well designed. The design need not be overly complex but it must address all desired strengths and resistances. Therefore a series of preferred embodiments can be envisaged.

It is highly preferred to have a self-supporting apparatus as in various applications a constructed filter zone does not serve the desired purpose or request. One typical example is the conversion an existing swimming pool. Typically this entails breaking and demolishing of the swimming pool and the entire area around it. This may not be desirable and/or may be prohibitive in costs. Having a fully self-supporting apparatus allows for the device to be placed upon the existing surface, paving, underground, etc. without breaking or any form of destructive activities. Furthermore it allows for the apparatus to be partially put beneath the surface, indeed entailing some form of digging but not essentially having to demolish the entire 'old swimming pool area'. It can be envisaged and imagined that partial or full interment allows for certain demands with regard to the self-supporting nature of the system to be slackened. This slack may entails certain security measures which over dimension the required strength in order to meet local safety standards and regulations. It may also entail certain fields of regulations with regard to noise, heat, cold, vibrations, resonance etc. This may be relevant to the entire systems or only part of the system. It is not part of the invention to remove all self-supporting properties, but alleviation of certain demand with respect to local conditions and settings do not detract from this invention or of its self-supporting nature. The suite of biotic processes is to remain self-encompassed within a self-supporting structure. It may or may not be placed in sequence with other additional systems, existing or not, that are not self-supporting as long as the absence of such properties are not transferred to the system of these inventions. For instance a sudden water surge that would predictable annihilate the self-supporting properties of this invention and its encompassed biotic processes.

In addition, the apparatus can be provided with various measuring devices in order for the system to maintain desired properties of chemical and physical nature of the water body even up to the level where the system is self-regulating. Typically the various biotic processes will maintain the water chemistry in complete balance. It may however be desired to add measuring and controlling devices as the environmental settings and spatial location of the system can yield sudden shocks to the system. Examples are sudden water surge, chemical spills, nutrient overload, heat waves, mechanical effects, etc. Typically the biota are capable of dealing with such unexpected events and these are referred to in scientific literature as steep gradients. Moreover such steep gradients may even be conducive to a stronger biotic system. Adaptation to these gradients does take some time however and this may not be desirable as the usage of the full water body may have to be continued e.g. during swimming competitions. For such events it is reasonable to measure any major deviations in important water chemistry parameters and predict what is to happen and take remediation measure reducing the adaptation period and/or reducing the steepness of the gradient. Examples of important water chemistry parameters are acidity, alkalinity, pH, EC, temperature, both water and ambient, day and night temperature, solar irradiation, turbidity, DOC, BOD, bacterial counts, oxygen level, CO2 levels, etc. This is a non-exhaustive list. The measuring of these parameters may be done outside the system, inside the system or inside the water bodies at other points. It may be done in real time, on a continuous base, on a frequent base, automated, manual, mechanical, electrical, etc. As a result of the observation that one measure falls outside its desired ideal range one can do nothing or one can act. Examples of actions are one time actions, irregular actions, re-curing regular actions or long term solutions and remediation. A one time action could be flushing all or part of the system, removing filter material or biotic material or other undesired materials. A regular action could be stopping or starting a certain pump or device or aerators. A long term action may be adding or adapting all or part of the filtration material, for instance adding certain filter materials to create a stronger buffer against acidification.

It is clear that a continuous flow of water must be maintained. This can be maintained by any means of device that moves water or gasses from one point to another. Examples are centrifugal pumps, peristaltic pumps, membrane pumps, gravity flows, whirlpool flows, airlift pumps, aeration, flotation caused by gasses. However, in addition to the main flow various side flows may be superposed. These side flows may have two major purposes. The first purpose is to move water within the overall system in order for it to reiterate its subjection to a certain biotic process or increase its retention time within a certain biotic process. Although it serves another purpose this moving of water essentially is a smaller version of the main water stream and can thus be generated by similar means as mentioned above for the main water flow. The second purpose of moving water is to dynamise the water. For the purpose of this invention we use the verb dynamization. Dynamization is any means of generating a water flow which as a result brings water into its natural energetic state. This energetic state can for instance be measured as its resonance and the deviation the resonance the water from a natural resonance observed for instance in pristine mountain streams. An example of improved resonance of water is the better dissolution of entrained salts and thus the reduction of undesired precipitation. There are various means to dynamize water. Examples are flowforms, vortex generator, schauberger funnels, spiral pools, centripetal pumps, flows through treated ceramics or ceramic loaded devices, total hardness reducers (e.g. PTH), static mixers, right twist flowers, etc. There are passive systems such as vortex generators that will increase turbulence and thus increase the level of interaction of the water with beneficial organisms. There are furthermore devices that use light to improve the resonance of water, such as UV light. Instead of killing harmful bacteria and viruses with excessive doses of UV light, lower doses of UV light are beneficial to beneficial micro-organisms which then out compete the harmful organisms.

It is also clear that there are selected devices and systems, either active or passive, to the overall system in order for the water to become more dynamised in order to increase the effectiveness of the biotic processes belonging to the masterblocks. In addition, it also improves the resonance of the water body in order for the water to better interact with humans and pets (and their microbial flora) in the larger water body. Dynamising the water aids in conveying beneficial properties generated by the biota inside the filtration system to the total water body.

Regarding set-up, fully designed biological converting unit (BCU) are placed in line or in series or in parallel to an existing water body. This would entail that before and after the entrance and exit of the BCU system other systems and or device may be present. Such devices could be, but not limited to, skimmers, leaf catchers, conventional biological filters, sand filters, UVC sterilizers, ozonators, etc. These devices may also be placed behind the BCU. Additional dynamisation devices before or after the BCU may be placed. It is a part of a preferred embodiment of this invention to increase dynamisation of the water which leaves the BCU, regardless whether it is dynamised before, after or within the BCU, in order for the beneficial properties of the beneficial biota to be conveyed to the total water body, in particular the water receptacle outside the BCU filtering system.

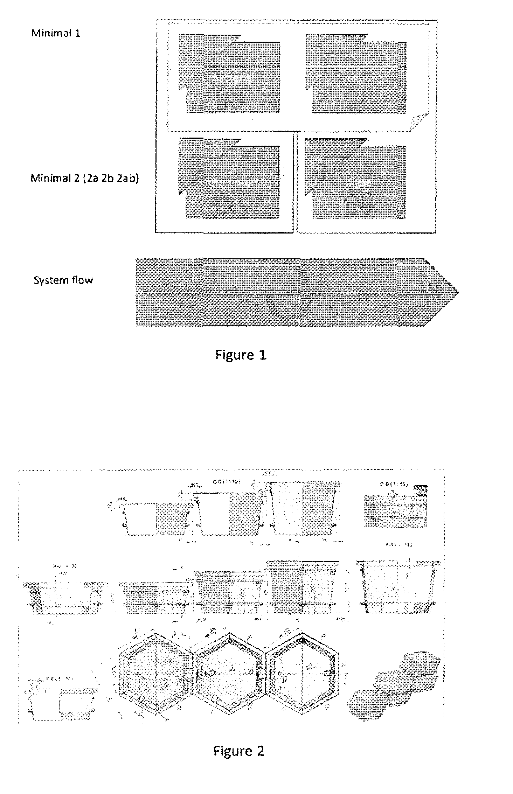

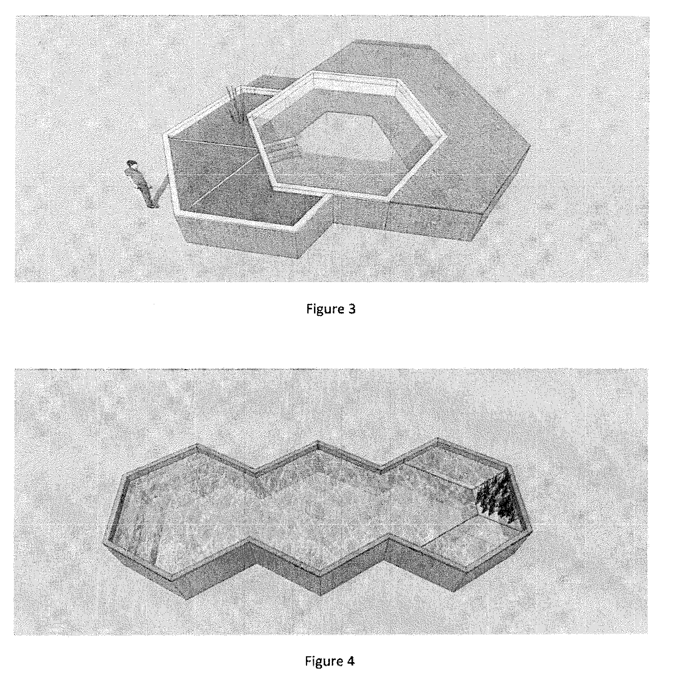

### Embodiments (Fig. 1, 2, 3, 4)

### Embodiment 1

A stand-alone device (BCU) for the reconversion of a conventional chemical swimming pool. The BCU is installed without having to break, demolish or otherwise damage the existing pool and its surrounding area. In a preferred embodiment the system is fully pre-activated and the pool can be used within days for recreational or leisure activities. In embodiment 1 execution all four masterblocks are present. This BCU is conceived as one big monoblock and is conceived as an interconnection of several modules. These modules are connected in a horizontal plane or in cascade along a sloping surface or staircase. In accordance with another embodiment the BCU is conceived with several modules stacked on top of one another. These are referred to as BCU towers.

### Embodiment 2

A BCU is connected to an existing spa device in order for the BCU to treat the water Embodiment 3 The BCU for leisure (BLU) provides all beneficial effects of the traditional spa devices including those of the original natural spas of temperate heat. It can also be smaller in that its function is that of the cool to ice-cold plunging tubs or baths that are often employed in conjunction with saunas, therapeutic centers, beauty center, wellness centers etc. The bioleisure unit essentially holds a major water receptacle in which one can sit, plunge, wade, walk, bade, relax, exercise, etc. and an additional part (attached or freestanding) that holds the water filtration system. In freestanding mode, the BCU is similar to embodiment one. If it is attached it forms one part of the entire self-supporting system.

Another version of the BIOLEISURE units is a self-supporting swimming pool. In this configuration the main water body or receptacle is intended to be used primarily for recreational or therapeutic purposes, mainly swimming, hydro-aerobics, hydro lifting, etc. This water body is substantially larger than the spa version and is more in a size order of the swimming pools in embodiment 1. Again there is a water treatment system, either attached or integrated, or attached and separated. The size of this system is dependent on the level and intensity of usage and dynamization is being applied for.

The BCU can be used for therapeutic purposes and may receive a larger loading and thus may require adapted filtration power. For instance the use of mud packings or oils needs can be considered. When specifically treating skin conditions in a marine or even hyper saline water body, the BCU is optimized such as to consider the potential pathogenic nature of the skin conditions which have to be addressed by the filtration systems as well as adapting the selected biota to marine or hyper saline water properties.

### Embodiment 3

A unit that consists of a BCU system and a water receptacle that serves as a drinking or drenching well. This well may be for human use or animal use. The difference with embodiment 3 would be that as a rule the surface and volume of the well receptacle (i.e. the open water body) is typically smaller than the filtration system, whereas in embodiment 3 the open water body is larger than the filtration system. In a preferred embodiment the water is substantially dynamised. This device addresses a phenomenon that could be called 'thirst drinking'. Heavily treated water is often heated, and loaded with chemicals. Upon drinking this water one often has the feeling that one's thirst has not been slaked. This is not just human subjectivity as animals are known to experience the same and cattle has been known to drink them to death (by rupturing guts and vessels). This is a phenomenon especially known to horse owner who know that an overheated horse must be paced when it start drinking. This embodiment results in water that is dynamised and thus no longer overheated, this type of water will cool down the overheated nature of the human/animal drinking the treated water and thus slake its thirst.

### Embodiment 4

A mobile BCU that can be coupled to other BCU's to increase the overall treatment strength. These devices are intended for the use of bioremediation of larger water bodies, such as ponds, fishing ponds, recreational ponds, lakes, rivers, brooks, marshes, etc. This typically concerns water bodies that have been overloaded with chemicals, nutrients and usage. This includes spillage or intended effluent of grey water, domestic waste, industrial waste water, black water, agricultural water, etc. These devices are used to clean up a water body, restore the natural strength of the water body and preferably dynamise the water. As such these are bio-remediation devices. This may require the BCU to produce large quantities of vegetative biomass that has to be removed or harvested on a regular basis. Given the fast growth of reed, bulrushes, sugar cane, seaweeds and algae it stands to reason that a preferred embodiment would include species belonging to these groups.

### Embodiment 5

BCU systems that are employed to maintain a high water quality in various reservoirs that are constructed for the purpose of soil infiltration, water buffering, fire security, recirculation, recycling, stormdrain, rainwater, flood plains, etc. Said large water bodies above or underground are often retained over longer periods of times and can become unbalanced, dirty even hazardous. The BCU systems that are conceived for this purpose maintain water quality and allow these large reservoirs to be safe and even healthy. It is not excluded that a fire security pond at a company is converted to a recreational company pool by installing a BCU.

### Embodiment 6

Water bodies have also been part of interior decoration and today they can be found in hotel lobbies, airports, at reception desks, exhibitions, tradeshows, shopping malls, etc. Frequently these become soiled and unbalanced systems and all too often they become dirty and smelly and may form a health hazard. Often here the solution is also chemical treatment. The BCU of this embodiment is integrated in ornamental water bodies that can be installed in hotels and airport with lots of human interaction but meanwhile maintaining its full biological balance. This results in clean healthy water present in a stress full environment. In the preferred embodiment with increased dynamisation these water bodies will have a soothing effect on the human mind in an otherwise very stressed situation such as airports or office building.

It is already stated before that the systems are to be applied in the field of applications as described above. The parties that enjoy the benefits of the system in their leisure, hobby, recreational and other applications may be human, but may include pets, farm and other domesticated animals, wild animals held in captivity such as amusement parks or zoos. By expansion the systems may also be applied to highly valued animals in commercial production facilities, for example the parent animals of a breeding facility that represent a unique genetic lineage, or an entire grouping of breeder animals representing a larger desired gene pool. By further expansion the system may be applied for the use of the offspring of such parent animals, regardless whether they enjoyed the benefits of the invention or not, and regardless of the final destination of the offspring and regardless of the period of time both offspring and breeder parents reside in an application using the invention. It is understood that in the case of a closed recirculation system the invention is used simultaneously in front and after the recreational/application area. Therefore it can be said to be both in front and behind at the same time.

## Claims

1. An apparatus for the natural treating of water, comprising of at least a heterotrophic unit which decomposes organic loading and a phototrophic unit which incorporates nutrients derived from said heterotrophic unit.

2. An apparatus in accordance with claim 1 further comprising a fermentation unit and/or a mixotrophic algal unit.

3. An apparatus further in accordance with claims 1-2 further comprising means for dynamization of the total water body, including the water outside the apparatus.

4. An apparatus in accordance with claims 1-3 whereby the filter materials are pre-activated in one or more of said units.

5. Use of the apparatus in accordance with claims 1-4 for therapeutic use.

6. Use of said apparatus in accordance with claims 1-4 for the natural treating of water in water leisure and/or water recreational and/or health and/or body treatment activities.

7. Use of the apparatus in accordance with claim 6 in pools and spas.

8. An apparatus in accordance with claims 1-7 which is self-containing.

9. An apparatus in accordance with claims 1-8 which is self-supporting.
